# EUROPEAN PATENT SPECIFICATION

(11) **EP 2 423 162 B1**
(45) Date of publication and mention of the grant of the patent: **12.10.2016**
(21) Application number: 10173853.2
(22) Date of filing: 24.08.2010
(51) Int. Cl.: B82Y 30/00, B82Y 40/00, C01B 31/02

(54) **Fabrication of carbon nano- or microtubes by using a self-rolling process**
Herstellung von Kohlenstoffnanoröhrchen oder -mikroröhrchen unter Verwendung eines Selbstrollverfahrens
Fabrication de nano ou microtubes de carbone à l'aide d'un processus d'auto-enroulement

(43) Date of publication of application: 29.02.2012
(73) Proprietor: Leibniz-Institut für Polymerforschung Dresden e.V., 01069 Dresden (DE)
(72) Inventor: Nandan, Bhanu, Dr., 01187 Dresden (DE); Kumar, Kamlesh, Dr., Jaipur 303702 (IN); Formanek, Petr, Dr., 01328 Dresden (DE); Stamm, Manfred, Dr., 01705 Freital (DE)
(74) Representative: Andrae | Westendorp Patentanwälte Partnerschaft

(56) References cited:
- US-A1- 2005 255 313
- US-A1- 2006 223 947
- K. KUMAR, B. NANDAN, V. LUCHNIKOV, F. SIMON, A. VYALIKH, U. SCHELER, M. STAMM: "A Novle Approach for the fabrication of Silica and Silica/Metal Hybrid Microtubes", CHEMISTRY OF MATERIALS, vol. 21, 21 August 2009 (2009-08-21), pages 4282-4287, XP002621573,
- LIANG C H ET AL: "Carbon nanotubes filled partially or completely with nickel", JOURNAL OF CRYSTAL GROWTH, ELSEVIER, AMSTERDAM, NL, vol. 218, no. 1, 1 September 2000 (2000-09-01), pages 136-139, XP004214622, ISSN: 0022-0248, DOI: DOI:10.1016/S0022-0248(00)00557-1
- V. LUCHNIKOV, O. SYDORENKO, M. STAMM: "Self-Rolled Polymer and Composite Polymer/Metal Micro- and Nanotubes with Patterned Inner Walls", ADVANCED MATERIALS, vol. 17, no. 9, 1 May 2005 (2005-05-01), pages 1177-1182, XP002621574,
- LUCHNIKOV ET AL: "Self-rolled polymer microtubes with engineered hidden walls", PHYSICA E - LOW-DIMENSIONAL SYSTEMS AND NANOSTRUCTURES, ELSEVIER SCIENCE BV, NL, vol. 37, no. 1-2, 15 March 2007 (2007-03-15), pages 236-240, XP005925471, ISSN: 1386-9477, DOI: DOI:10.1016/J.PHYSE.2006.10.021
- KUMAR K ET AL: "Formation of self-rolled polymer microtubes studied by combinatorial approach", EUROPEAN POLYMER JOURNAL, PERGAMON PRESS LTD. OXFORD, GB, vol. 44, no. 12, 1 December 2008 (2008-12-01), pages 4115-4121, XP025711059, ISSN: 0014-3057, DOI: DOI:10.1016/J.EURPOLYMJ.2008.09.009 [retrieved on 2008-09-15]
- K. KUMAR, B. NANDAN, V. LUCHNIKOV, E. B. GOWD, M. STAMM: "Fabrication of Metallic Microtubes Using Self-Rolled Polymer Tubes as Templates", LANGMUIR, vol. 25, no. 13, 20 April 2009 (2009-04-20), pages 7667-7674, XP002621575,
- KAMLESH KUMAR ET AL: 'Fabrication of carbon microtubes from thin films of supramolecular assemblies via self-rolling approach' JOURNAL OF MATERIALS CHEMISTRY vol. 21, no. 29, 10813, 01 January 2011, GB, pages 1 - 5, XP055257042 DOI: 10.1039/c1jm11258a ISSN: 0959-9428
- K. Chennakesavulu ET AL: "Synthesis and characterization of carbon microtube/tantalum oxide composites and their photocatalytic activity under visible irradiation", RSC Adv., vol. 5, no. 69, 1 January 2015 (2015-01-01), pages 56391-56400, XP055257037, DOI: 10.1039/C5RA06812F

## Description

The present invention refers to a specific process for the preparation of carbon-based nano- or microtubes and to specific carbon-based nano- or microtubes obtainable by the process of the invention, in particular those having a specific aspect ratio (tube length/internal tube diameter) or comprising a metal-containing layer. Furthermore, the present invention relates to a solid support comprising a plurality of unidirectionally oriented carbon-based nano- or microtubes as well as to the use of the carbon-based nano- or microtubes according to the invention or the solid support according to the invention in chemical or medical applications.

During the last two decades the study of carbon based materials has attracted significant attention due to their unique electrical, chemical, and mechanical properties. These properties make such materials attractive for potential use in micro- and nano-electronic devices, separation media, catalyst supports, energy storage/conversion systems, proximal probes, strength enhancing materials and optical components. Among the various carbon based materials, carbon nanotubes perhaps are the most promising and widely investigated materials in recent times.

Nano- and microtubes have a large number of potential applications in microelectronics, cell analysis, microfluidics, waveguides, and chemical and biochemical sensors. Specific functions performed by microtubes may include encapsulation, chromatography, liquid and catalyst carriers, flow control, heat exchange, reinforcement, detection, filtration, sensing, optical waveguiding, and so forth.

Types of nano- and microtubes include **carbon** nano- and microtubes, **polymer** nano- and microtubes and **metal** nano- and microtubes. Due to the different chemical and physical nature of the carbon, polymer and metal materials, the respective nano- and microtubes can be used for different applications and differ by their methods for preparation.

The present invention refers to carbon-based materials since carbon nanotubes have very promising applications e.g. in medicine or chemistry due to their unique properties which originate from the characteristic internal hollow cavity structure peculiar to a tubular shape, which imparts some intriguing capillarity and wetting phenomena and intercore chemistry. For example, a carbon nanotube can serve as a nanoreactor for introducing reactive species and reactants, followed by the desired reactions, as a test tube for catalysis, separation, storage, and property exploration of materials encapsulated within, or as a nanochannel for the adsorption and transport of various molecules.

Carbon nano- and microtubes can be prepared by carbonization of spun poly(acrylonitrile) hollow fibers or by using a carbothermal reduction process (see e.g. Han et al. Chem. Mater. 2001, 13, 2656; Wang et al. Adv. Func. Mat. 2008, 18, 1809-1823; Hu et al. Adv. Mater. 2004, 16, 153-156).

Han et al. (Chem. Comm., 1998, pages 2087/2088) describe a process for preparing carbon nano/microtubes by preparing polypyrrole coated poly(ethylene terephtalate) (PET) fibers followed by pyrolysis. The obtained carbon nano/microtubes have a lengths of several centimeters and a tube diameter of several micrometers.

Pure metallic microtubes represent a completely different type of microtubes but are interesting because of their electronic properties such as high electrical and thermal conductivity as well as optical reflectivity (see e.g. Kumar et al.; Langmuir 2009, 25(13), 7667-7674).

Kyotani et al. (US Patent Application Publication US 2005/0255313 A1) discloses a carbon nanotube composite material containing a carbon nanotube and a continuous layer of a metal covering the inner surface of the carbon nanotube.

Kumar et al. (Chem. Mater. 2009, 21, 4282-4287) describes a method to fabricate silica and silica/metal hybrid microtubes via self-rolling of polymer layers.

Olesik et al. (US Patent Application Publication US 2006/0223947 A1) discloses a method for making a polymeric nanomaterial by dispersing a self-polymerizable monomer selected from the group consisting of an oligoyne, a polyyne or mixtures thereof in a solvent, and causing the self-polymerizable monomer to polymerize thereby forming the polymeric nanomaterial.

Luchnikov and Stamm (Physica E 37, 2007, 236-240) disclose micro and nanotubes manufactured by self-rolling of thin bilayer polymer films (polystyrene/poly(4-vinyl pyridine), PS/P4VP) gradually released from a solid substrate.

There is a need for providing new processes for manufacturing carbon-based nano- or micro tubes which provide for carbon-based nano- or microtubes with new properties. Furthermore, there is a need for providing improved carbon-based nano- or microtubes.

Thus, one object of the present invention is to provide an improved process for preparing carbon-based nano- or microtubes and improved carbon-based nano- or microtubes e.g. having a higher aspect ratio (tube length/internal tube diameter) than the known carbon nanotubes.

The present invention provides *inter alia* for the following embodiments:
(1) Process for the preparation of carbon-based nano- or microtubes comprising, preferably consisting of, the steps of:
   a) forming on a solid support, a first layer comprising a first polymer,
   b) forming on the first layer one or more further layers, wherein a second layer is formed on the first layer and comprises a second polymer, wherein the second layer has a smaller volume expansion than the first layer upon treatment of the layers with at least one source selected from solvents or thermal energy,
   c) self-rolling the assembly of layers by treating with said source to provide tubes, preferably single tubes, wherein the self-rolling is initiated by mechanically patterning the assembly of layers, and
   d) pyrolyzing the tubes; wherein
   the first and/or second layer comprises a carbon precursor, which is a polymer that provides a high carbon yield during pyrolysis and is selected from the group consisting of phenol-aldehyde resin, urea-aldehyde resin, aniline-aldehyde resin, polyimide, polyacrylonitrile, polydivinylbenzene, polyvinylpyridine, polypyrrole, polythiophene, polyaniline, polyfurfural alcohol, carbohydrates, and copolymers or mixtures thereof, wherein the deposition of the layers is carried out in a spin-coating process, dip-coating process or film casting process. Step (c) can be carried out in absence or presence of solvents.
(2) Process according to item (1), wherein the second layer has a lower swellability in a solvent compared to the swellability of the first layer in said solvent, and/or wherein the second layer has a smaller coefficient of thermal expansion at a certain temperature compared to the coefficient of thermal expansion of the first layer at said temperature.
(3) Process according to item (1) or (2), wherein the self-rolling in step (c) is initiated by mechanically patterning the assembly of layers and then contacting the assembly of layers with said solvent or heating the assembly of layers to said temperature. Preferably, the assembly of layers is heated for a period of between 0.01 and 1.0 hours, in particular 0.1 to 1 hours preferably at a temperature of between 25 and 150°C. Preferably, the heating is performed by microwave heating. Preferably, the mechanical patterning of the assembly of layers is carried out by using a lithographic process or by cutting or scratching the pattern into the assembly of layers. Preferably, a pattern in form of stripes, lines or areas is provided.
(4) Process according to any of the preceding items, wherein the first and/or second layer is prepared by depositing on the support a solution comprising the first/second polymer and optionally a monomer of the carbon precursor, preferably removing the solvent and then polymerizing the monomer to form the carbon precursor, preferably the monomer is polymerized by adding a second monomer and/or a catalyst and/or by carrying out a thermal or radiation treatment. Preferably, the solvent that is used for depositing the second layer does not significantly dissolve the first layer.
(5) Process according to any of the preceding items, wherein the deposition of the first and/or second layer is carried out in a spin-coating process. Preferably, a binding agent is additionally deposited onto the first layer prior to the deposition of the second layer. Preferred binding agents are silanes, thiophenes and phosphazenes.
(6) Process according to any of the preceding items, wherein a metal-containing layer is formed as a further layer after at least a second layer has been formed on the first layer. Preferably, the metal-containing layer is subjected to a functionalization treatment prior to the self-rolling process. Particularly preferred, the metal-containing layer is subjected to an etching process to provide a pattern on the surface of the metal-containing layer.
(7) Process according to any of the preceding items, wherein the thickness of the second layer is smaller than the thickness of the first layer, preferably the thickness of the first layer is between 50 nm and 500 nm and the thickness of the second layer is between 30 nm and 200 nm.
(8) Process according to any of the preceding items, wherein the metal-containing layer comprises or consists of elemental metal(s), preferably gold, aluminum, copper, titanium, platinum; or mixtures of said elemental metals; composite materials; or metal compounds such as metal oxides, preferably SiO₂.
(9) Process according to any of the preceding items, wherein the solid support is made from inorganic materials, preferably metals, metal oxides or metal composite materials, preferably the support is a silicon wafer. Preferably, the support comprises an outer layer onto which the first layer is deposited, wherein the outer layer (sacrificial layer) is dissolved during the self-rolling process. Preferably, the outer layer is a metal layer such as an aluminum layer or titanium layer or a metal oxide layer such as a SiO₂ layer.
(10) Process according to any of the preceding items, wherein the carbon precursor is a phenolic resin, preferably a resorcinol-formaldehyde resin (RF), preferably formed by polymerization of resorcinol monomers with formaldehyde vapor.
(11) Process according to any of the preceding items, wherein the first polymer is a polymer that provides a low carbon yield during pyrolysis, preferably the first polymer is a homopolymer or copolymer, preferably a block homopolymer or block copolymer. Preferred polymers for the first layer are poly(4-vinylpyridine) (P4VP), poly(2-vinylpyridine), poly(ethylene oxide), poly(acrylic acid), or mixtures thereof. Preferably, the first layer comprises a gradient regarding the concentration of one or more components of the first layer in at least one direction of the layer. Preferably, the first and/or the second polymers represent cross-linking polymers. Preferably, the step of forming the first and/or second layers comprises a step of cross-linking the layer, preferably by using an ultraviolet radiation treatment.
(12) Process according to any of the preceding items, wherein the second polymer is a polymer that provides a low carbon yield during pyrolysis, preferably the second polymer has a lower swellability than the first polymer, further preferred the second polymer is polystyrene (PS), polyisoprene, polybutadiene, poly(divinylbenzene). Preferably, the first polymer is less hydrophobic than the second polymer.
(13) Process according to any of the preceding items, wherein the molar ratio of the monomeric units of the first polymer/monomeric units of carbon precursor and/or the molar ratio of the monomeric units of the second polymer/monomeric units of carbon precursor is at least 2:1, preferably at least 2.5/1, further preferred 3:1, even further preferred at least 4:1. Further preferred the upper limit of the aforementioned ratios is 8:1, preferably 7:1, further preferred 6:1 and most preferred 1:1.
(14) Process according to any of the preceding items, wherein the tube is pyrolysed at a temperature of between 600°C and 1200°C in an inert atmosphere, preferably in an argon atmosphere.
(15) Process according to any of the preceding items, wherein the tube is pyrolysed over a time period of between 1 and 5 hours, preferably between 2.5 and 3.5 hours.
(16) Process according to any of the preceding items, wherein the solvent that is used for the self-rolling is selected from the group consisting of acidic aqueous solutions, basic aqueous solutions, polar organic solvents, and non-polar organic solvents. Preferably the solvent is an aqueous solution, preferably the solvent is an acidic aqueous solution, preferably an aqueous solution of dodecylbenzenesulfonic acid (DBSA) or hydrochloric acid, preferably an aqueous solution having a concentration of dodecylbenzenesulfonic acid (DBSA) of between 0.5 wt.-% and 5 wt.-%.
(17) Process according to any of the preceding items, wherein the self-rolling of the assembly of layers is terminated by terminating the treatment that is applied for the self-rolling, preferably the self-rolling is terminated by removing the tube from the acidic solution.
(18) Process according to any of the preceding items, wherein the tube walls prior to pyrolysis consist of at least three layers of the assembly of layers.
(19) Carbon-based nano- or microtube, preferably obtainable according to the process according to the invention, preferably having an aspect ratio (tube length/internal tube diameter) of less than 100.
(20) Carbon-based nano- or microtube according to item (19), wherein the wall thickness of the carbon-based nano- or microtube is at least 400 nm.
(21) Carbon-based nano- or microtube according to item (19) or (20), wherein the tube length is between 1 mm and 100 mm.
(22) Carbon-based nano- or microtube according to any of items 19 - 21, wherein the inner tube diameter is between 25 nm and 10 mm, preferably between 50 nm and 10 mm, further preferred between 100 nm and 10 mm, further preferred between 25 nm and 50 nm or between 50 nm and 100 nm, or between 100 nm and 10 mm.
(23) Carbon-based nano- or microtube according to any of items 19 - 22, wherein the carbon layers of the tube wall have a homogeneous pore size distribution, wherein the pore size preferably is in the range of 4.5 to 100 nm.
(24) Carbon-based nano- or microtube according to any of items 19 - 23, wherein the inner layer of the tube is covered with a metal-containing layer, preferably, the metal-containing layer consist of an elemental metal, preferably gold, titanium and platinum, mixtures of said elemental metals, composite materials, or metal oxides, preferably SiO₂.
(25) Carbon-based nano- or microtube according to any of items 19 - 24, wherein the metal-containing layer is magnetic.
(26) Carbon-based nano- or microtube according to any of items 19 - 25, wherein the metal-containing layer has a thickness of between 1 and 100 nm, preferably between 1 and 50 nm, further preferred between 5 and 50 nm.
(27) Carbon-based nano- or microtube according to any of items 19 - 26, wherein the tube has at least three layers of carbon or carbon/metal-containing layers.
(28) Carbon-based nano- or microtubes prepared according to the process of any of items 1-18.
(29) Solid support comprising a plurality of unidirectionally oriented carbon-based nano- or microtubes according to items 19 - 27 or the carbon-based nano- or microtubes prepared according to the process of any of claims 1 - 18.
(30) Use of the carbon-based nano- or microtubes according to any of items 19 - 27, or the carbon-based nano- or microtubes prepared according to the process of any of claims 1 - 18 or the solid support according to item 29 as test tubes in catalytic microreactors, in separation devices, in storage devices or microfluidic devices such as inkjet printers, in micro- and nano-electronic devices, as catalyst supports, as energy storage/conversion systems, as proximal probes, strength enhancing materials, optical components and membrane, biotechnical and medical applications.

The potential of known nanotubes as reactors or channels is significantly hampered due to their available dimensions. This precludes the introduction of some large-diameter biomolecules (such as proteins) and inorganic compound particles and/or clusters of a certain large size (to be selectively transported) into nanotubes, even if the micromanipulation techniques are available. Therefore, the carbon-based nano- or microtubes according to the present invention having a specific inner diameter or having a specific aspect ratio as described herein are e.g. considered capable of shedding additional light on various physical and chemical phenomena occurring within a carbon nanotube cavity. Moreover, carbon nano- or microtubes tubes with large inner diameters are expected to be ideal candidates for microfluidic applications.

It has unexpectedly been found within the context of the present invention that it is possible to provide carbon-based nano- and microtubes by applying a self-rolling process. Self-rolling processes are known for preparing polymer nano- or microtubes but until now it has not been possible to apply such processes for preparing carbon-based nano- or microtubes.

As e.g. described in Luchnikov et al. (Adv. Mater. 2005, 17, 1177-1182) tubular micro- or nanochannels made of polymer are fabricated by self-rolling of strained bilayer films released in a controllable manner from a solid substrate. However, the preparation of carbon-based nanotubes by using such a process is not known.

Within the context of the present invention, in order to obtain carbon-based nano- or microtubes from polymer tubes obtained by the self-rolling process, the polymer tubes were subjected to pyrolysis. However, no carbon-based nano- or microtubes were obtained upon pyrolysis of tubes consisting of e.g. a PS/P4VP bilayer since only a very small amount of carbon was left after pyrolysis.

In order to provide a carbon structure upon pyrolysis, e.g. a highly cross-linked resorcinol-formaldehyde (RF) resin was applied on top of a bilayer assembly prior to the self-rolling process. The RF resin was used in order to provide a carbon-source for forming the tubes. However, since the RF resin does not have good solubility in solvents, it was impossible to directly coat this material on the polymer bilayer.

However, it has unexpectedly been found that carbon precursors can be added to the bilayer itself without negatively influencing the self-rolling process. Unexpectedly, it was possible to provide carbon nano- or microtubes upon pyrolysis of the polymer tubes comprising the carbon precursor although the carbon precursor was employed in admixture with the other polymers that were used for the bilayer.

Furthermore, it was possible to provide carbon/metal hybrid microtubes by using the process according to the invention. Such hybrid microtubes can be prepared by providing a metal-containing layer as a further layer on the bilayer or multilayer system. It has been found that inclusion of this metal-containing layer improves the uniformity of the shape of the tube.

The significance of the process according to the present invention is the possibility of the formation of advantageous carbon and carbon/metal hybrid tubes. Moreover, carbon can be combined with any combination of single or multi-metals resulting in hybrid microtubes with a broad range of properties. The diameter of the tube could be tuned by changing the thickness of polymer/metal layers and the number of rolls which can be controlled by a range of parameters.

Thus, according to one aspect, the present invention refers to a process for the preparation of carbon-based nano- or microtubes comprising the steps of:
a) forming on a solid support, a first layer comprising a first polymer,
b) forming on the first layer one or more further layers, wherein a second layer is formed on the first layer and comprises a second polymer, wherein the second layer has a smaller volume expansion than the first layer upon treatment of the layers with at least one source selected from solvents or thermal energy,
c) self-rolling the assembly of layers by treating with said source to provide tubes, preferably single tubes, wherein the self-rolling is initiated by mechanically patterning the assembly of layers, and
d) pyrolyzing the tubes; wherein
   the first and/or second layer comprises a carbon precursor, which is a polymer that provides a high carbon yield during pyrolysis and is selected from the group consisting of phenol-aldehyde resin, urea-aldehyde resin, aniline-aldehyde resin, polyimide, polyacrylonitrile, polydivinylbenzene, polyvinylpyridine, polypyrrole, polythiophene, polyaniline, polyfurfural alcohol, carbohydrates, and copolymers or mixtures thereof, wherein the deposition of the layers is carried out in a spin-coating process, dip-coating process or film casting process. Step (c) can be carried out in absence or presence of solvents.

The term "nano- or microtube" within the context of the present invention refers to nano- or micrometer-sized tubes having a tube wall that is formed from one or several layers (e.g. polymer, carbon or metal-containing layers). The carbon-based nano- or microtubes according to the invention are obtained by pyrolysis of a rolled assembly of layers, wherein the constitution of the obtained tube walls does not have to be homogeneous but can comprise different layers like e.g. carbon layers or metal-containing layers that are placed on each other. If the tube is e.g. prepared by rolling several layers of a multilayer assembly comprising a first and a second layer containing a carbon precursor as well as a metal-containing layer, the tube wall after pyrolysis will e.g. comprise alternate layers of carbon and metal.

It is understood that the term "carbon structure" or the term "carbon" with respect to the carbon material that is left after pyrolysis does not mean that the carbon content that is present in the structure or layer of the tube wall is 100 wt.-%. Typically, at least some amount of remaining elements like e.g. nitrogen or hydrogen from the polymer tube prior to pyrolysis will remain in the final tube since pyrolysis typically is not 100% complete. Preferably, the "carbon structure" or carbon layer of the tube wall will have a carbon content of at least 80 wt.-%, preferably at least 85 wt.-%, further preferred at least 90 wt.-% and most preferably at least 95 wt.-%. In order to determine whether the pyrolysis provides the aforementioned values, tubes can be analyzed after pyrolysis by using Energy-dispersive X-ray spectroscopy (EDX).

The term "carbon-based nano- or microtubes" or "carbon nano- or microtubes" refers to nano- or microtubes that have tube walls which comprise a carbon structure that is obtained by pyrolysis of polymeric materials. By contrast, e.g. pure polymer nano- or microtubes have a structure made of organic polymeric materials. The term "carbon-based nano- or microtubes" also refers to nano- or microtubes that have a carbon structure but which contain additional structures such as metal-containing layers.

In steps (a) and (b), a first layer and a second layer and optional further layers on the second layer are formed by commonly known methods. The second and optional further layers are deposited on the respective previously formed layer. The first layer is formed on a solid support. The polymer layers represent supramolecular assemblies since they are formed by using a pre-synthesized first and second polymer, respectively. In addition to the carbon precursor, the first and second polymer, respectively, the layers can comprise further polymeric or non-polymeric components provided that these do not prevent the self-rolling of the layered assembly. Preferably, the first and second layer comprise at least 80 wt.-%, further preferred at least 85 wt.-%, even further preferred at least 90 wt.-%, and most preferably at least 95 wt.-% of polymeric materials; also preferred, the layers consist of polymeric materials.

The term "deposition of a layer" as used herein refers to the deposition of a composition, preferably a solution, comprising the polymers or polymer precursors and optional further components that form the layer. Thus, a composition for depositing the first or second layer comprises at least the first or second polymer or precursors thereof and optional further components such as polymers, monomers and the carbon precursor. Preferably, the carbon precursor is contained in the composition/solution as a monomer. Further preferred, the carbon precursor is formed by crosslinking the monomers in the deposited layer, preferably by reacting the monomers with a crosslinking agent.

Preferably, the composition that forms the first and/or second layer can be crosslinked. Preferably, the first and/or the second polymers represent cross-linking polymers and is/are crosslinked, preferably with the carbon precursor or monomers that form the carbon precursor, after deposition of the layer on the substrate or previous layer. The term "crosslinking" as used herein refers to providing a covalent bond between polymer chains and monomers.

Preferably, the composition or solution comprising the first or second polymer comprises a solvent. Any suitable solvents can be used, wherein the solvents should not dissolve the previously formed layers. Solvents to be used are e.g. toluene, N,N'-dimethylformamide (DMF) or chloroform.

After deposition of the composition/solution that forms the first/second layer, preferably the solvent(s) is/are removed.

Additionally preferred, each of the deposited layer comprising the polymer(s), polymer precursor(s), carbon precursor(s) and/or monomer(s) that form the carbon precursor(s) and optionally other components is polymerized/crosslinked prior to the deposition of the subsequent layer. This polymerization/crosslinking is preferably achieved by adding a further component such as a crosslinking agent, a monomer, or a catalyst; and/or by carrying out a thermal or radiation treatment. Preferably, the further component is applied as a vapor.

Preferably, the solvent that is used for depositing the second layer does not significantly dissolve the first layer. Preferably, crosslinking of the carbon precursor containing layer is achieved by treating the layer with formaldehyde or 1,4-diiodobutane.

The formed first and/or second layer, preferably comprises the first and second polymer, respectively, in an amount of at least 50 wt.-%, further preferred at least 55 wt.-%, even further preferred at least 60 wt.-%, further preferred at least 65 wt.-%, even further preferred at least 70 wt.-%, further preferred at least 75 wt.-%, even further preferred at least 80 wt.-%. In addition, the formed first and/or second layer, preferably comprises the first and second polymer, respectively, in an amount of at most 95 wt.-%, further preferred at most 90 wt.-%, further preferred at most 85 wt.-%. If the first and second polymer, respectively, represents a mixture of polymers that provide a low carbon yield during pyrolysis, the aforementioned amounts refer to the mixture of polymers that represent the first or second polymers. Preferably, the first and/or second polymer does not represent a mixture of polymers.

In particular embodiments, the formed first and second layer, respectively, comprises other components (other than the first and second polymer, respectively, and the carbon precursor) in amounts of less than 30 wt.-%, further preferred less than 25 wt.-%, further preferred less than 20 wt.-%, even further preferred less than 15 wt.-%, further preferred less than 10 wt.-%, further preferred less than 5 wt.-%. Said other components can e.g. be binding agents that improve the adhesion between the layers. The binding agent can also be deposited on the first layer, i.e. between the first and second layer. The amount of carbon precursor(s) in the first and/or second layer is preferably less than 35 wt.-%, further preferred less than 30 wt.-%, further preferred less than 25 wt.-%. If crosslinking agents are used for crosslinking the monomers to provide the carbon precursor, the amount of crosslinking agents is preferably not considered when calculating the amount of carbon precursor. The amount of crosslinking agents to be used is preferably less than 15 wt.-%, further preferred less than 10 wt.-%, further preferred less than 5 wt.-% and most preferred less than 2 wt.-% (based on the total weight of the respective layer).

The term "polymer" as used herein with respect to the polymers contained in the first, second and optional further layers prior to any polymerization or crosslinking steps after deposition of the layers refers to polymers preferably having a number average molecular weight (Mₙ) of above 5000 g/mol, further preferred above 10000 g/mol, even further preferred above 40000 g/mol, wherein the upper limit of the average molecular weight is preferably 1000000 g/mol, preferably 700000 g/mol.

The average molecular weight of the first and/or second polymer is preferably above 5000 g/mol, preferably above 10000 g/mol, further preferred above 20000 g/mol, even further preferred above 30000 g/mol, wherein the upper limit of the average molecular weight is preferably 1000000 g/mol, preferably 700000 g/mol, also preferred 100000 g/mol prior to or during deposition of the polymers but prior to any polymerization or crosslinking step.

Additionally preferred, the first polymer is a polymer that provides a low carbon yield during pyrolysis. The term "low carbon yield" as used within the context of the present invention refers to materials that provide a residue upon pyrolysis of preferably below 20 wt.-%, further preferred below 15 wt.-%, further preferred below 10 wt.-%, even further preferred below 5 wt.-%. In order to determine whether the pyrolysis provides the aforementioned values, said materials can be pyrolysed at the pyrolysation temperature of the respective polymer. The polymer can be weighed prior to and after pyrolysis to determine the percentage of residue that is left. Pyrolysis is preferably carried out over a period of 1 hour preferably at a temperature of between 600°C and 800°C in inert atmosphere.

Analogously, the term "high carbon yield" as used within the context of the present invention refers to materials that provide a residue of at least 20 wt.-%, preferably at least 25 wt.-%, further preferred at least 30 wt.-% and most preferably at least 35 wt.-% upon pyrolysis (e.g 800°C for 3h in argon atmosphere). Preferably, the first and/or second layer that comprises the carbon precursor provides a high carbon yield.

Preferably the first polymer is a homopolymer or copolymer, preferably a block homopolymer or block copolymer. Preferred polymers for the first layer are poly(4-vinylpyridine) (P4VP), poly(2-vinylpyridine), poly(ethylene oxide), poly(acrylic acid), polypyrrole, polyaniline, polythiophene, or mixtures thereof.

Additionally preferred, the second polymer is a polymer that provides a low carbon yield during pyrolysis, preferably the second polymer has a lower swellability than the first polymer, further preferred the second polymer is polystyrene (PS), polyisoprene, polybutadiene, poly(divinylbenzene). Preferably, the first polymer is less hydrophobic than the second polymer.

In a preferred embodiment of the invention, the first polymer is poly(4-vinylpyridine) (P4VP) and/or the second polymer is polystyrene. Further preferred, the carbon precursor in this embodiment is a phenolic resin, preferably a resorcinol-formaldehyd resin (RF), preferably formed by polymerization of resorcinol monomers with formaldehyde vapor. Preferably, the polystyrene is crosslinked with UV radiation.

According to the present invention, the carbon precursor is a polymer that provides a high carbon yield during pyrolysis, and is selected from the group consisting of phenol-aldehyde resin, urea-aldehyde resin, aniline-aldehyde resin, polyimide, polyacrylonitrile, polydivinylbenzene, polyvinylpyridine, polypyrrole, polythiophene, polyaniline, polyfurfural alcohol, carbohydrates, and copolymers or mixtures thereof, preferably the carbon precursor is a phenolic resin, preferably a resorcinol-formaldehyde resin (RF), preferably formed by polymerization of resorcinol monomers with formaldehyde vapor. The monomers that can be used to provide the carbon precursor are those monomers that provide the aforementioned carbon precursors upon polymerization/crosslinking by using suitable components, e.g. formaldehyde, or suitable treatments, e.g. UV radiation treatment.

Additionally preferred, the molar ratio of the monomeric units of the first polymer(s)/monomeric units of the carbon precursor and/or the molar ratio of the monomeric units of the second polymer(s)/monomeric units of the carbon precursor is at least 2:1, preferably at least 2.5/1, further preferred 3:1, even further preferred at least 4:1. Further preferred the upper limit of the aforementioned ratios is 8:1, preferably 7:1, further preferred 6:1 and most preferred 5:1. If the first and/or second layer additionally comprises other polymers than the first or second polymer, the aforementioned molar ratios can be calculated by considering the monomeric units of the first and further polymers/monomeric units of the second and further polymers.

With this respect, the term "monomeric units of the carbon precursor" refers to all types of carbon precursors that are used in the first and second layer, respectively, wherein the group of carbon precursors is preferably defined as the group of compounds that each provides a high carbon yield.

Additionally preferred, the thickness of the second layer is smaller than the thickness of the first layer, preferably the thickness of the first layer is between 50 nm and 500 nm and the thickness of the second layer is between 30 nm and 200 nm. The thickness of the layers is determined after deposition and optional polymerizing and crosslinking of the layers. The thickness can be measured by using ellipsometry or atomic force microscopy (AFM).

Preferably, the first layer and/or second layer comprise a thickness gradient in at least one direction of the layer. The thickness gradient in the polymer layer can e.g. be provided by opting for a gradient speed in the dip-coating process.

According to the invention, the deposition of the layers is carried out in a spin-coating process, dip-coating process, or film casting process, preferably in a spin-coating process. Preferably, a binding agent is additionally deposited onto the first layer prior to the deposition of the second layer. Preferred binding agents are silanes, thiophenes and phosphazenes.

The deposition of the compositions/layers is preferably followed by polymerization and/or crosslinking of the compositions/layers to provide the first and/or second layer. Crosslinking of the first and optional further polymers in the first layer can be carried out according to commonly known methods such as by chemical or radiation treatment. Suitable methods are crosslinking by using ultraviolet (UV) radiation treatment or by treatment of the layer with saturated 1,4-diiodobutane vapor or formaldehyde.

Then, the self-rolling process is carried out. Within the context of the present invention, the bending moment is e.g. achieved due to different swelling properties of chemically dissimilar polymers in selective solvents. The lateral forces, which create the bending moment, arise in response to an unequal change in the specific volume of the components of the film. For example, polystyrene (PS) and poly(4-vinylpyridine) (P4VP) constitute good choices for the bilayer materials. PS demonstrates minimal water uptake, thus forming a stiff hydrophobic film upon exposure to water. P4VP is less hydrophobic and swells in acidic aqueous solutions because of the protonation of the polymer chains.

The strained film when allowed to relax, releases strain and tries to reach a minimum potential energy by scrolling. The rolling of the layers results in the formation of tubes.

The strain in the film can also arise by unequal thermal expansion of top and bottom layer, or different crystal lattice constants of top and bottom layer. The work of bilayer polymer-based microactuators relies on the ability of certain conjugated polymers (polypyrrole, polyaniline, polythiophene) to change their specific volume e.g. under electro-chemical oxidation and reduction which provides a bending moment.

In order that the bi- or multilayer assembly that is used in the process according to the invention is suitable for self-rolling, the second layer has a smaller volume expansion than the first layer upon treatment in the self-rolling step. In addition, the optional further layers that are deposited on the second layer are chosen so that they do not prevent the self-rolling of the assembly of layers. This means that these optional layers are not too rigid (e.g. due to their thickness) and do not provide a strain opposite to the strain of the first and second layers which is greater than the strain provided by the first and second layers.

Additionally preferred, the second layer has a lower swellability in a solvent compared to the swellability of the first layer in said solvent, and/or the second layer has a smaller coefficient of thermal expansion at a certain temperature compared to the coefficient of thermal expansion of the first layer at said temperature.

The self-rolling in step (c) is initiated by mechanically patterning the assembly of layers. The patterning comprises to cut through the assembly of layers until the support or sacrificial layer is reached. The patterning process divides the assembly of layers into small areas that can have any form, wherein forms having straight lines and preferably rectangular angles are preferred. Preferably, a pattern having the form of stripes is provided. Moreover, it is possible to create complex 3D patterns, created by photo- or electron lithography on the top of the polymer bilayer. The resulting carbon objects can then be obtained in the form of spirals, springs, rings, solenoids etc. and their dimensions can be easily programmed by the direction of rolling and the dimensions of the template polymer tubes.

Preferably, the mechanically patterning of the assembly of layers is carried out by using a lithographic process or by cutting or scratching the pattern into the assembly of layers. Mechanically patterning can e.g. be carried out by using a sharp razor blade.

Preferably following the mechanically patterning of the assembly of layers, said assembly is contacted/treated with means for self-rolling.

The volume expansion of the assembly of layers can then be achieved by treating the assembly of layers with at least one source (means for self-rolling) selected from solvents or thermal energy. It is known in the art which treatment is suitable for providing a volume expansion of such an assembly of layers. Moreover, it requires only routine experimentation to find out whether a volume expansion can be achieved in a particular assembly of layers.

When using a second layer having a lower swellability and/or a smaller coefficient of thermal expansion, the volume expansion in the assembly of layer is achieved by contacting the assembly of layers with a suitable solvent or heating the assembly of layers to a suitable temperature. Preferably, the assembly of layers is heated for a period of between 0.01 and 1.0 hours preferably at a temperature of between 25 and 150°C. A preferred way of heating the assembly of layers is microwave heating.

It was found that microwave heating leads to advantageous carbon-based nano- or microtubes of the invention, including metal (e.g. metal oxide)-containing hybrid tubes, and allows to considerably shorten the time required for heating/pyrolysis to achieve good results. Microwave heating as such is known to the skilled person and any microwave heating device or microwave oven can be used. According to one embodiment, microwave heating takes place in dielectric materials due to the polarization effect of electromagnetic radiation at frequencies between 300 MHz and 300 GHz.

Preferably, the assembly of layers is contacted with a solvent. Preferably, the solvent is selected from the group consisting of acidic aqueous solutions, basic aqueous solutions, polar organic solvents, and non-polar organic solvents. Preferably the solvent is an aqueous solution, preferably the solvent is an acidic aqueous solution, preferably an aqueous solution of dodecylbenzenesulfonic acid (DBSA) or hydrochloric acid, preferably an aqueous solution having a concentration of dodecylbenzenesulfonic acid (DBSA) of between 0.5 wt.-% and 5 wt.-%.

The self-rolling process can be terminated by terminating the treatment with at least one source selected from solvents; thermal energy; electric potential; chemical agents, such as reducing agents, or oxidants; and radiation energy. For example, if the treatment is carried out by contacting the assembly of layers with a solvent, the treatment is terminated by removing the tubes from the solvent. The rate of rolling can also be controlled e.g. by acid concentration and UV radiation dose. Suitable methods are known from Kumar et al. (Euro. Polym. J. 2008, 44, 4115).

In step (d), the tube is preferably pyrolysed at a temperature of between 600°C and 1200°C, preferably in an inert atmosphere, preferably in an argon atmosphere. Additionally preferred, the tube is pyrolysed over a time period of between 1 and 5 hours, preferably between 2.5 and 3.5 hours.

Additionally preferred, the solid support is made from inorganic materials, preferably metals, metal oxides or metal composite materials, preferably the support is a silicon wafer. Preferably, the support comprises an outer layer onto which the first layer is deposited, wherein the outer layer (sacrificial layer) is dissolved during the self-rolling process. Preferably, the outer layer is a metal layer such as an aluminum layer or titanium layer or a metal oxide layer such as a SiO₂ layer. For example, highly polished single-crystal silicon wafers of {100} orientation can be used as support.

Additionally preferred, a metal-containing layer is formed as a further layer after at least a second layer has been formed on the first layer, i.e. preferably prior to the self-rolling process. The metal-containing layer comprises, preferably consists of, an elemental metal, preferably gold, aluminum, copper, titanium, platinum; or mixtures of said elemental metals; composite materials; or metal oxides, preferably the metal-containing layer comprises or consists of SiO₂.

The metal-containing layer can be deposited on the second or optional further layer(s) by commonly applied methods such as by sputtering technique or physical or chemical vapor deposition. The metal-containing layer preferably has a thickness of between 1 and 100 nm, preferably between 1 and 50 nm, further preferred between 5 and 50 nm.

Preferably, the metal-containing layer is subjected to a functionalization treatment prior to the self-rolling process. Particularly preferred, the metal-containing layer is provided with a pattern by means of photolithography, i.e. the metal-containing layer is subjected to an etching process to provide a pattern on the surface of the metal-containing layer. The pattern will then be located in the tube's inner walls if the metal containing-layer is the outer layer of the assembly of layer which is also preferred according to the present invention.

In another embodiment of the process according to the invention, porous carbon-based nano- or microtubes are prepared by controlling the synthesis conditions. In this case formation of the first and/or second layer that comprises the carbon precursor is carried out in a controlled manner in order that the crosslinking treatment is not completed.

In a preferred embodiment, when using formaldehyde for crosslinking, the reaction time and vapor pressure of the formaldehyde is controlled such that the RF resin formation was stopped before its completion. Hence, during the pyrolysis, the mass loss is more and the amount of carbon residue left at the end decreased.

In another preferred embodiment of the invention, carbon-based nano-or microtubes are prepared that comprise a metal oxide. Such hybrid carbon-based nano-or microtubes are preferably prepared by using a sol-gel process. In this case, a thin layer of SiO₂ is deposited on top of the assembly of layers, preferably P4VP-RF/PS bilayer following a sol-gel method as e.g. described in Zou et al. (Langmuir 2008, 16, 10453-10461).

In a preferred embodiment of the invention, the process comprises providing at least three layers of the assembly of layers as the tube walls prior to pyrolysis.

In a preferred embodiment of the present invention, the process consists of first providing a layer of supramolecular assemblies formed by P4VP with resorcinol, followed by the in-situ polymerization of the resorcinol monomers with formaldehyde vapors to form RF resin within the P4VP layer. Providing a thin film of PS on top of this layer, self-rolling the bilayer, and then pyrolysing the tubes leads to the formation of carbon-based nano- or microtubes according to the present invention.

The present invention also refers to carbon-based nano- or microtubes. The carbon-based nano- or microtubes preferably have an aspect ratio (tube length/internal tube diameter) of less than 100, further preferred of less than 80, even further preferred of less than 60. Further preferred, the carbon-based nano- or microtubes comprise a metal-containing layer as described herein.

The carbon-based nano- or microtubes according to the invention are obtained by using the process according to the present invention as described herein. Further preferred, the carbon-based nano- or microtubes have an aspect ratio (tube length/internal tube diameter) of less than 100, further preferred of less than 80, even further preferred of less than 60.

Within the context of the present invention, the lengths or diameters of the tubes in the nanometer or micrometer range can be determined by SEM (scanning electron) microscopy.

Additionally preferred, the carbon-based nano- or microtubes comprise a metal-containing layer prepared by using a metal-containing layer as a further layer after at least a second layer has been formed on the first layer. This is described in detail above.

All embodiments as described above with respect to the process for preparing the carbon-based nano- or microtubes also characterize the carbon-based nano- or microtubes according to the invention as described herein.

Additionally preferred, the carbon-based nano- or microtubes according to the invention have a wall thickness of the nano- or microtube is at least 400 nm, further preferred at least 500 nm, even further preferred at least 600 nm and most preferred at least 700 nm. Additionally preferred, the tube length is between 1 mm and 100 mm, in other embodiments, the tube length is between 1 mm and 90 mm, between 1 mm and 80 mm, between 1 mm and 70 mm, between 1 mm and 60 mm, between 1 mm and 50 mm, between 1 mm and 40 mm, between 1 mm and 30 mm, between 1 mm and 20 mm, between 1 mm and 10 mm, or between 1 mm and 5 mm.

Additionally preferred, the inner tube diameter of the carbon-based nano- or microtube according to the invention is between 25 nm and 10 mm, preferably between 50 nm and 10 mm, further preferred between 100 nm and 10 mm, further preferred between 25 nm and 50 nm or between 50 nm and 100 nm, or between 100 nm and 10 mm. In another embodiment of the invention, the inner tube diameter is between above 100µm and 10 mm, preferably between 500µm and 10 mm.

Additionally preferred, the carbon layers of the tube walls have a homogeneous pore size distribution, wherein the pore size preferably is in the range of 4.5 to 200 nm.

Additionally preferred, the tube walls of the carbon-based nano- or microtubes according to the invention comprises metal-containing layer(s). The term "metal-containing layer" as used herein refers to layers comprising elemental metals, mixtures of elemental metals or metal compounds such as metal oxides as well as mixtures of metal compounds. According to one embodiment, the term "metal-containing layer" as used herein shall also encompass discontinuous layers as well as one or more metal-containing particles. According to a preferred embodiment, the metal-containing layer (or metal-containing particles) consist of an elemental metal, preferably gold, titanium and platinum, mixtures of said elemental metals, composite materials, or metal oxides, e.g. SiO₂. According to a preferred embodiment, the metal-containing layer (or metal-containing particle) is magnetic. According to a further preferred embodiment, the metal-containing layer (or metal-containing particles) has (have) a thickness of between 1 and 100 nm, preferably between 1 and 50 nm, further preferred between 5 and 50 nm. Further preferred, the inner layer (i.e towards the inner surface of the tube) of the carbon-based nano- or microtubes according to the invention, or at least a part thereof, is covered with said metal-containing layer or metal-containing particles. According to a further preferred embodiment, the outer layer of the carbon-based nano- or microtubes is not covered with a metal-containing layer or is covered with a different metal-containing layer in order to provide different surface properties. In one embodiment, the outer layer of the carbon-based nano- or microtubes can be coated or also be coated with a metal-containing layer or metal-containing particles. Such a metal-containing layer or metal-containing particles can e.g. be provided by using the solvated metal atom dispersion method, e.g. described by Segura et al. ("The synthesis of hybrid nanostructures of gold nanoparticles and carbon nanotubes and their transformation to solid carbon nanorods", Carbon 46 (2008), 884-889) and the references cited therein.

Additionally preferred, the tubes of the carbon-based nano- or microtubes according to the invention have at least three layers of carbon or carbon/metal-containing layers.

The present invention also refers to a solid support comprising a plurality of unidirectionally oriented carbon-based nano- or microtubes according to the present invention, in particular carbon-based nano- or microtubes prepared according to the process of the present invention. Preferably, the support comprises one layer of said oriented carbon-based nano- or microtubes. The support is prepared by using the process according to the invention, wherein the tubes are not removed from the support. Thus, the tubes are advantageously bond to the support as a consequence of the formation process of the tubes. The advantage of the process for preparing the support is that the tubes can be produced at a pre-defined location and can thus easily be integrated in device fabrication.

The present invention also refers to the use of the carbon-based nano- or microtubes according to the invention or the carbon-based nano- or microtubes prepared according to the process of the present invention or the solid support according to the present invention as test tubes in catalytic microreactors, in separation devices, in storage devices or microfluidic devices such as inkjet printers, in micro- and nano-electronic devices, as catalyst supports, as energy storage/conversion systems, as proximal probes, strength enhancing materials, optical components and medicinal applications, preferably as test tubes in catalytic microreactors, in separation devices, storage devices or microfluidic devices such as inkjet printers and medicinal applications.

Additionally preferred, the nano- or microtubes represent carbon-based hybrid microtubes comprising metal(s) or metal oxides. Preferably, the tube walls comprise a thin layer made of metal-containing materials such as SiO₂. SiO₂ can e.g. be deposited on top of the P4VP-RF/PS bilayer following sol-gel method as e.g. described in Zou et al. (Langmuir 2008, 16, 10453-10461).

### Description of the Figures:

**Figure 1** shows the preparation of carbon-based and carbon/metal hybrid nano- or microtubes according to the invention: (a) deposition of P4VP-resorcinol SMA film on silicon wafer; (b) Synthesis of P4VP-resorcinol-HCHO resin by exposing the film to formaldehyde vapors; (c) deposition of a layer of PS; (d) deposition of metallic layer on the polymer bilayer; (e) mechanical scratching of the multilayer; (f) rolling of the multilayer in DBSA solution; (g) self-rolled polymer based microtubes; (h) carbon (or hybrid) microtubes obtained after carbonization step.
**Figure 2** shows an FTIR spectra of (a) resorcinol; (b) P4VP; (c) P4VP-resorcinol SMA; (d) P4VP-resorcinol/formaldehyde resin.
**Figure 3** shows TGA curves of PS, P4VP, and P4VP-resorcinol/formaldehyde resin.
**Figure 4** shows SEM images of (a) carbon microtube; (b) open end of carbon microtube obtained after making cut using FIB (focused ionic beam) method.
**Figure 5** shows a Raman spectrum of a carbon microtube.
**Figure 6** shows SEM images of (a) a carbon/gold hybrid microtube; (b) a carbon/platinum hybrid microtube; (c) a carbon/silica hybrid microtube.

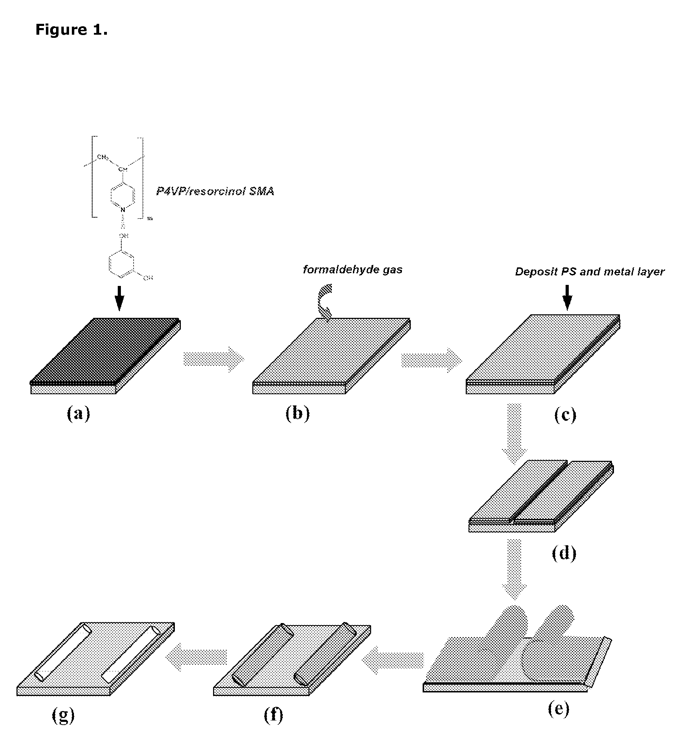

In detail, **Figure 1** shows a schematic illustration of the procedure adopted for the fabrication of carbon microtubes. In the first step a layer of pre-synthesized P4VP-resorcinol supramolecular assembly (SMA) is deposited on a silicon wafer by dip-coating or spin-coating from a N,N'-dimethylformamide (DMF) solution.

In the second step, the SMA film is exposed to formaldehyde vapor to cross-link the resorcinol molecules into a highly cross-linked RF resin within P4VP matrix.

In the next step a thin layer of polystyrene is deposited on top of this film which then is cross-linked with UV radiation.

Subsequently, in an optional step, a desired metal or a combination of metals could be deposited by physical vapour deposition on top of the SMA/PS bilayer.

The obtained multilayer of SMA/PS/metal is then micro-structured via straight scratches made by a sharp razor blade and is exposed to an aqueous solution of dodecylbenzenesulfonic acid (DBSA). The microstructuring enables the DBSA solution to penetrate to the bottom layer of the multilayer film. Supramolecular binding between DBSA and pyridine rings causes swelling of the P4VP and thus induces in layer strain in the film, which is relaxed by rolling starting at the scratches. The upper layers (i.e. PS and/or metal) protect the P4VP layer from uncontrollable swelling apart at the front of rolling. The microtube thus formed has an inner wall made from metal whereas the outer wall consists of polymer. The rate of rolling was found to be slow (few µm/min) and can be controlled by acid concentration and UV irradiation dose. Hence, it is possible to stop the rolling process when a desired number of rolls is achieved. Finally, the tube is pyrolysed at 800°C in an argon atmosphere for 3 h in order to carbonize the polymer/resin layers resulting in carbon or carbon/metal hybrid microtubes.

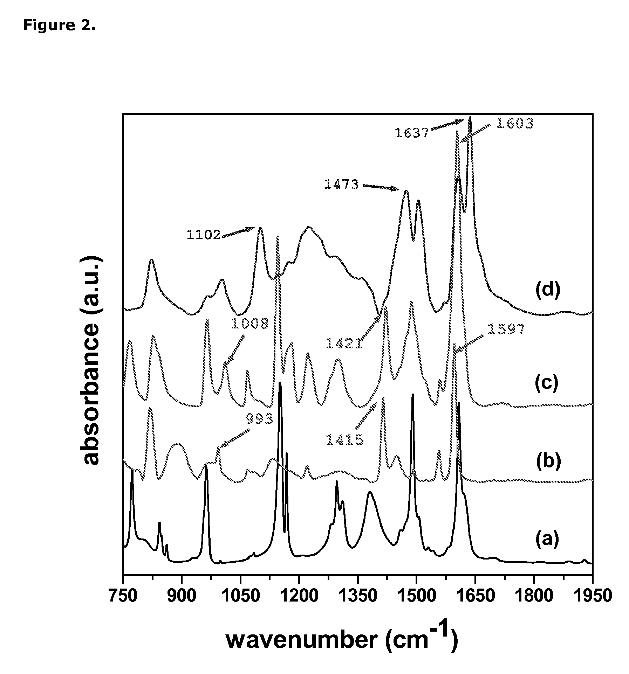

P4VP is well-known to form supramolecular complexes via hydrogen bonding or ionic interactions with small molecules containing suitable functionality (see Ruokolainen et al. Macromolecules 1996, 29, 3409-3415; de Wit et al. Macromolecules 2008, 41, 4200-4204). The supramolecular assemblies in the present system were formed by hydrogen bonding between the pyridine unit of P4VP and hydroxyl group of resorcinol where the molar ratio of resorcinol with respect to the pyridine units was 1. Fourier-transform Infrared (FTIR) spectroscopy provides evidence for the formation of hydrogen bonds and the FTIR spectrum of resorcinol, P4VP, and P4VP-resorcinol SMA are displayed in Figure 2. The P4VP characteristic bands sensitive to the formation of hydrogen bonds at 993, 1415, and 1597 cm⁻¹ were found to shift to 1008, 1421, and 1603 cm⁻¹, respectively, for the P4VP-resorcinol SMA. These vibrational frequency shifts are very similar to those reported for similar P4VP based hydrogen-bonded systems. Resorcinol is known to form cross-linked resins by adding formaldehyde at 2-, 4-, and/or 6- positions in its aromatic ring. In the present experiments, the resorcinol present within the P4VP film on silicon substrates was exposed to formaldehyde vapor to cross-link the resorcinol molecules within the P4VP film. The reaction rate can be controlled here by the vapor pressure of formaldehyde. The resulting resin is made by methylene bridges between phenol molecules which was further confirmed by FTIR spectra shown for the P4VP-resorcinol SMA exposed to formaldehyde vapor. The absorbance bands at 1637, 1473, and 1102 cm⁻¹ observed are characteristics of C=C aromatic ring, C-H methylene bridge and C-O-C methylene-ether bridge, respectively, of RF resins.

After putting a cross-linked PS layer on top of the P4VP-RF resin layer, the bilayer was microstructured with the help of a sharp razor blade. These microstructures patterns provide a path for the acidic solution to the bottom layer on silicon substrate. The sample was immersed in an aqueous solution of DBSA to initiate the rolling. The P4VP form complex with the DBSA solution and specific volume of resin increase. It must be noted here that DBSA makes ionic complexes with pyridine units which are much stronger than the hydrogen bonds. The resulting swelling of the P4VP-RF resin layer is resisted by the top cross-linked PS layer inducing strain in the film which initiates rolling of the bilayer. The microtubes thus formed were carbonized in a furnace at 800°C in argon atmosphere.

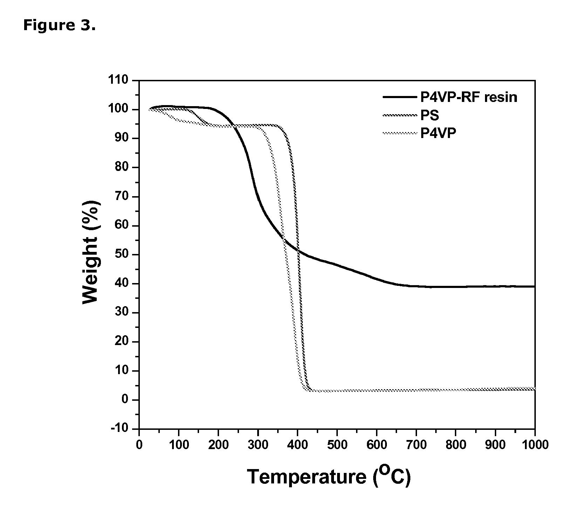

The carbonization process was studied using thermogravimetric analysis (TGA) of the samples which measured the mass loss upon heating from room temperature to 1000°C in argon atmosphere. Figure 3 shows the TGA thermograms of PS, P4VP, and P4VP-RF resin. Neat PS and P4VP homopolymers starts to degrade at about 350°C and 300°C respectively. Both these homopolymers show single step degradation which finishes at 435°C with approximately 3 wt.-% residue. The P4VP-RF resin starts to decompose at 200°C and continuously degrades in multisteps till 700°C and the residue left after 800°C is almost 40 wt.-%. Hence, TGA clearly shows that the RF resin is main source of carbon in the present system.

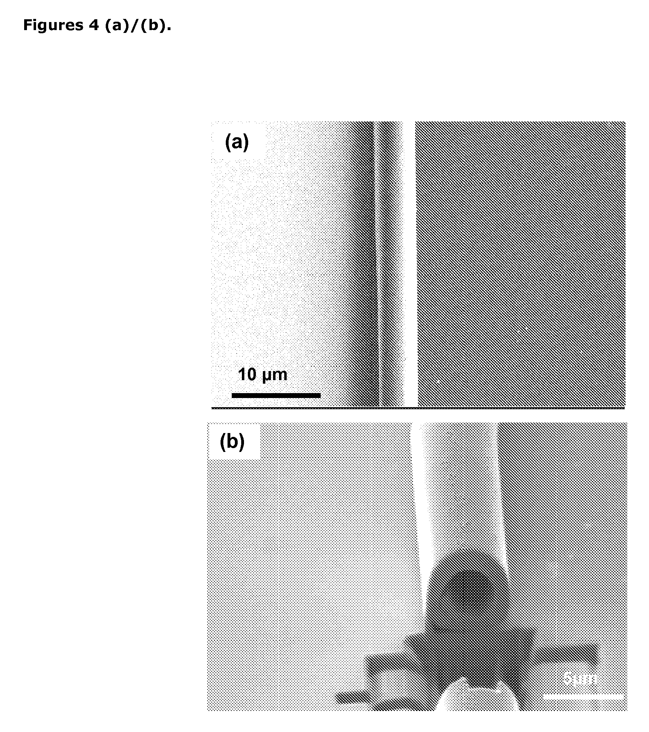

Figure 4a shows SEM image of a portion of the carbon tube obtained after the pyrolysis step. The carbon tubes shown in the image has internal pore diameter of 2.5 µm and wall thickness of 700 nm. The thickness of P4VP-resorcinol SMA and PS layers were 180 and 40 nm respectively. Hence, considering mass loss during pyrolysis because of removal of most of the organic moieties, it could be assumed that the microtube had more than three layers of the bilayer film. In principle, it is possible to stop the rolling process after certain number of rolls and hence control the wall thickness of the carbon microtube by controlling parameters such as thickness of the bilayer, concentration of the DBSA solution, and immersion time in the acid solution.

It should also be noted that the carbon microtubes fabricated here had a very high aspect ratio. The length of the microtubes was limited only by the size of the silicon wafer used and highly aligned carbon microtubes having length as long as 2 cm were fabricated. The inner open cavity of the tube throughout the length was observed by focussed ion beam (FIB) cutting of the tube at some arbitrary position and the corresponding SEM image is shown in Figure 4b. It is clear from the figure that the tube still had open cavity after the pyrolysis step and did not collapse. It was also possible to produce porous carbon microtubes by controlling the synthesis conditions. In this case the reaction time and vapor pressure of the formaldehyde was controlled such that the RF resin formation was stopped before its completion. Hence, during the pyrolysis, the mass loss was more and amount of carbon residue left at the end decreased.

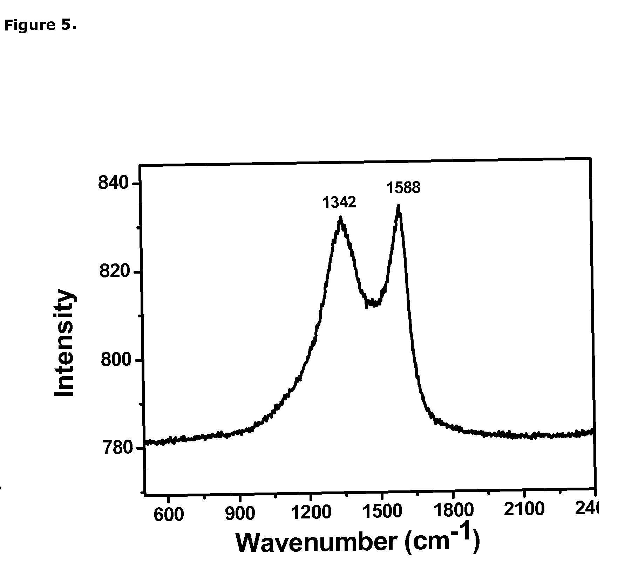

The formation of carbon was further confirmed by XPS (X-ray photoelectron spectroscopy), EDX and Raman spectroscopy measurements of the carbon microtubes. The XPS and EDAX clearly showed high yield of carbon in the tubes after pyrolysis. Furthermore, Raman spectra, as shown in Figure 5, showed two broad peaks centred at about 1338 and 1586 cm⁻¹. These two peaks correspond to well known D and G bands of graphite, respectively that are associated with the vibrations of sp2 carbon atoms with dangling bonds. The ratio of intensity of the two first-order D and G bands indicates a higher fraction of disordered amorphous carbon.

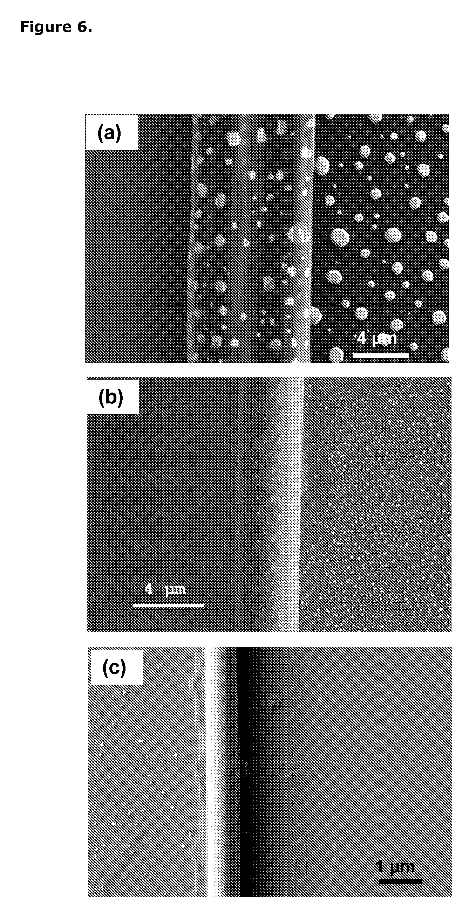

A remarkable advantage of the present approach is that it also allows fabricating carbon/metal hybrid microtubes. For this, a thin layer of desired metal is deposited on top of P4VP-RF/PS bilayer. Pyrolysis of the microtubes obtained from such multilayers results in the formation of carbon/metal hybrid tubes. As a proof-of-principle demonstration of this approach we fabricated carbon/gold and carbon/platinum hybrid microtubes as shown in Figure 6 a & b respectively.

Gold and platinum were deposited by physical vapor deposition. The figure shows that the hybrid microtubes consisted of solid carbon wall with the metal particles dispersed in it. It must be noted that during the pyrolysis process the uniform nanocluster layer of metal transforms into discrete polycrystalline granular structure. Furthermore, by tuning the conditions, it was possible to prepare carbon/metal hybrid porous microtubes. Furthermore, we also fabricated carbon/metal oxide hybrid microtubes combining our present approach with sol-gel process. In this case, a thin layer of SiO₂ was deposited on top of the P4VP-RF/PS bilayer following sol-gel method. The pyrolyzed microtubes obtained from such a multilayer resulted in fabrication of carbon/SiO₂ hybrid microtubes (Figure 6c). The XPS and EDX data of the carbon/metal hybrid microtubes clearly showed the presence of carbon and respective metals.

Moreover, the use of the polymer bilayer as the assisting layer in the rolling process potentially enables creation of complex 3D carbon patterns, created by photo- or electron lithography on the top of the polymer bilayer. Such objects as spirals, springs, rings etc. and their dimensions can be easily programmed by the direction of rolling and the dimensions of the template polymer tubes.

### Example

P4VP (Mₙ = 45900 g/mol, M_{w} = 82500 g/mol) and PS (Mₙ = 600,000 g/mol, M_{w} = 654,000 g/mol) were obtained from Polymer Source Inc. P4VP and resorcinol (4VP/resorcinol molar ratio = 1:1) were dissolved in DMF to form a 1 wt.-% solution. The solution was heated to 100°C for 5 hours and then kept at room temperature for overnight to ensure the formation of hydrogen bonds. The resulting SMA was then deposited on a clean silicon wafer by dip-coating (thickness ∼ 175-190 nm). The SMA film was then cured by exposing it to formaldehyde gas at 110°C for 6 hours. A thin PS film of 40 nm was deposited on the P4VP-RF resin layer and subsequently cross-linked with UV radiations using a UV lamp (G8T5, TecWest Inc., USA). This UV-lamp emitted radiation of 254 nm at 2.5W output. Optionally, a desired layer of metal was deposited on top of the layer using physical vapor deposition. A sharp razor blade was used to fabricate scratches on the mulitlayer film. Sample with microstructures was immersed in an aqueous solution of 1 wt.-% DBSA for rolling the multilayer. The rolled films were then carbonized at 800 °C in argon atmosphere for 3 h.

The morphology and chemical composition of the tubes was characterized by SEM, FIB, FTIR, EDX, XPS, and Raman spectroscopy. SEM was performed using a Zeiss Ultra 55 Gemini scanning electron microscope with an acceleration voltage of 5 kV. FTIR spectrum of the tube was obtained by FTIR spectrometer IFS 66v/s [Bruker, Germany].

The spectra were recorded in the transmission mode for the sample on silicon wafer. The FTIR spectrum of the sample was obtained after subtraction of the neat silicon wafer spectra. Axis Ultra (Kratos Analytical, England) spectrometer with Mono-AlKa X-ray source of 300 W at 20 mA was used to record the XPS spectra of tubes. The maximum information depth of the XPS method is not more than 8-10 nm. EDX of the samples was carried out in a Philips XL30 scanning electron microscope. The openings in the tubes were demonstrated using the FIB (Zeiss NEON 40 EsB).

## Claims

1. Process for the preparation of carbon-based nano- or microtubes comprising the steps of:
a) forming on a solid support a first layer comprising a first polymer,
b) forming on the first layer one or more further layers, wherein a second layer is formed on the first layer and comprises a second polymer, wherein the second layer has a smaller volume expansion than the first layer upon treatment of the layers with at least one source selected from solvents or thermal energy;
c) self-rolling the assembly of layers by treating with said source to provide tubes, preferably single tubes, wherein the self-rolling is initiated by mechanically patterning the assembly of layers, and
d) pyrolyzing the tubes;
wherein the first and/or second layer comprises a carbon precursor, which is a polymer that provides a high carbon yield during pyrolysis and is selected from the group consisting of phenol-aldehyde resin, urea-aldehyde resin, aniline-aldehyde resin, polyimide, polyacrylonitrile, polydivinylbenzene, polyvinylpyridine, polypyrrole, polythiophene, polyaniline, polyfurfural alcohol, carbohydrates, and copolymers or mixtures thereof,
wherein the deposition of the layers is carried out in a spin-coating process, dip-coating process or film casting process,
and wherein step (c) can be carried out in absence or presence of solvent(s).

2. Process according to claim 1, wherein the second layer has a lower swellability in a solvent compared to the swellability of the first layer in said solvent, and/or wherein the second layer has a smaller coefficient of thermal expansion at a certain temperature compared to the coefficient of thermal expansion of the first layer at said temperature.

3. Process according to claim 1 or 2, wherein the self-rolling in step (c) is initiated by mechanically patterning the assembly of layers and then contacting the assembly of layers with said solvent or heating the assembly of layers to said temperature, preferably heating the assembly of layers for a period of between 0.01 and 1.0 hours preferably at a temperature of between 25 and 150 °C, in particular microwave heating.

4. Process according to any of the preceding claims, wherein the first and/or second layer is prepared by depositing on the support a solution comprising the first/second polymer and optionally a monomer of the carbon precursor, preferably removing the solvent and then polymerizing the monomer to form the carbon precursor, preferably the monomer is polymerized by adding a second monomer and/or a catalyst and/or by carrying out a thermal or radiation treatment.

5. Process according to any of the preceding claims, wherein a metal-containing layer is formed as a further layer after at least a second layer has been formed on the first layer, the metal-containing layer preferably consisting of an elemental metal, in particular gold, aluminum, copper, titanium, platinum; or mixtures of said elemental metals; composite materials; or metal oxides, in particular SiO₂.

6. Process according to any of the preceding claims, wherein the carbon precursor is preferably a phenolic resin, preferably a resorcinol-formaldehyde resin (RF), preferably formed by polymerization of resorcinol monomers with formaldehyde vapour.

7. Process according to any of the preceding claims, wherein the first polymer is a polymer that provides a low carbon yield during pyrolysis, preferably the first polymer is a homopolymer or copolymer, preferably a block homopolymer or block copolymer.

8. Process according to any of the preceding claims, wherein the tube is pyrolysed at a temperature of between 600°C and 1200°C in an inert atmosphere, preferably in an argon atmosphere.

9. Process according to any of claims 1 to 9, wherein the mechanically pattering of the assembly of layers is carried out by using a lithographic process or by cutting or scratching the pattern into the assembly of layers.

10. Carbon-based nano- or microtube obtainable by the process according to any of claims 1-8.

11. Carbon-based nano- or microtube according to claim 10, wherein the process comprises the use of a metal-containing layer or metal-containing particles as a further layer after at least a second layer has been formed on the first layer.

12. Carbon-based nano- or microtube according to claim 10 or 11, wherein the tube length is between 1 mm and 100 mm and/or the wall thickness of the nano- or microtube is at least 400 nm.

13. Carbon-based nano- or microtube according to any of claims 10 - 12, wherein the inner layer of the tube is covered with a metal-containing layer, preferably, the metal-containing layer or metal-containing particles consist of an elemental metal, preferably gold, titanium and platinum, mixtures of said elemental metals, composite materials, or metal oxides, preferably SiO₂.

14. Solid support comprising a plurality of preferably unidirectionally oriented carbon-based nano- or microtubes according to claims 10 - 13 or the nano- or microtubes prepared according to the process of any of claims 1 - 9.

15. Use of the carbon-based nano- or microtubes according to any of claims 10 - 13, or the carbon-based nano- or microtubes prepared according to the process of any of claims 1 - 9 or the solid support according to claim 14 as test tubes in catalytic microreactors, in separation devices, in storage devices or microfluidic devices such as inkjet printers, in micro- and nano-electronic devices, as catalyst supports, as energy storage/conversion systems, as proximal probes, strength enhancing materials, optical components and membrane, biotechnical and medical applications.

## Patentansprüche

1. Verfahren zur Herstellung von Nano- oder Mikroröhrchen auf Kohlenstoffbasis, umfassend die Stufen:
a) Bilden einer ersten Schicht, die ein erstes Polymer umfasst, auf einem festen Träger,
b) Bilden von einer oder mehreren weiteren Schichten auf der ersten Schicht, wobei eine zweite Schicht auf der ersten Schicht gebildet wird und ein zweites Polymer umfasst, wobei die zweite Schicht bei Behandlung der Schichten mit mindestens einer Quelle ausgewählt aus Lösungsmitteln oder Wärmeenergie eine geringere Volumenausdehnung als die erste Schicht aufweist;
c) Selbstrollen der Zusammenstellung von Schichten durch Behandeln mit der Quelle, um Röhrchen, vorzugsweise Einzelröhrchen bereitzustellen, wobei das Selbstrollen durch mechanisches Strukturieren der Zusammenstellung von Schichten initiiert wird, und
d) Pyrolysieren der Röhrchen;
wobei die erste und/oder zweite Schicht einen Kohlenstoffvorläufer umfassen, der ein Polymer ist, das während der Pyrolyse eine hohe Kohlenstoffausbeute bereitstellt und ausgewählt ist aus der Gruppe bestehend aus Phenol-Aldehyd-Harz, Harnstoff-Aldehyd-Harz, Anilin-Aldehyd-Harz, Polyimid, Polyacrylnitril, Polydivinylbenzol, Polyvinylpyridin, Polypyrrol, Polythiophen, Polyanilin, Polyfurfuralalkohol, Kohlenhydraten und Copolymeren oder Mischungen davon,
wobei das Abscheiden der Schichten in einem Rotationsbeschichtungsverfahren, Tauchbeschichtungsverfahren oder Foliengießverfahren durchgeführt wird,
und wobei Stufe (c) in Abwesenheit oder Anwesenheit von Lösungsmittel(n) durchgeführt werden kann.

2. Verfahren nach Anspruch 1, wobei die zweite Schicht eine geringere Quellbarkeit in einem Lösungsmittel aufweist, verglichen mit der Quellbarkeit der ersten Schicht in dem Lösungsmittel, und/oder wobei die zweite Schicht einen kleineren Wärmeausdehnungskoeffizienten bei einer bestimmten Temperatur aufweist, verglichen mit dem Wärmeausdehnungskoeffizienten der ersten Schicht bei der Temperatur.

3. Verfahren nach Anspruch 1 oder 2, wobei das Selbstrollen in Stufe (c) durch mechanisches Strukturieren der Zusammenstellung von Schichten und anschließendes Kontaktieren der Zusammenstellung von Schichten mit dem Lösungsmittel oder Erwärmen der Zusammenstellung von Schichten auf die Temperatur initiiert wird, vorzugsweise Erwärmen der Zusammenstellung von Schichten für einen Zeitraum zwischen 0,01 und 1,0 Stunden, vorzugsweise auf eine Temperatur zwischen 25 und 150 °C, insbesondere Erwärmen durch Mikrowelle.

4. Verfahren nach einem der vorhergehenden Ansprüche, wobei die erste und/oder zweite Schicht hergestellt wird, indem auf dem Träger eine Lösung abgeschieden wird, die das erste/zweite Polymer und gegebenenfalls ein Monomer des Kohlenstoffvorläufers umfasst, vorzugsweise das Lösungsmittel entfernt und danach das Monomer polymerisiert wird, um den Kohlenstoffvorläufer zu bilden, wobei das Monomer vorzugsweise durch Zufügen eines zweiten Monomers und/oder eines Katalysators und/oder durch Durchführen einer Wärme- oder Strahlungsbehandlung polymerisiert wird.

5. Verfahren nach einem der vorhergehenden Ansprüche, wobei eine metallhaltige Schicht als eine weitere Schicht gebildet wird, nachdem mindestens eine zweite Schicht auf der ersten Schicht gebildet worden ist, wobei die metallhaltige Schicht vorzugsweise aus einem elementaren Metall, insbesondere Gold, Aluminium, Kupfer, Titan, Platin; oder Mischungen dieser elementaren Metalle; Verbundmaterialien oder Metalloxiden, insbesondere SiO₂ besteht.

6. Verfahren nach einem der vorhergehenden Ansprüche, wobei der Kohlenstoffvorläufer vorzugsweise ein phenolisches Harz ist, vorzugsweise ein Resorcin-Formaldehyd-Harz (RF), vorzugsweise gebildet durch Polymerisation von Resorcinmonomeren mit Formaldehyddampf .

7. Verfahren nach einem der vorhergehenden Ansprüche, wobei das erste Polymer ein Polymer ist, das während der Pyrolyse eine niedrige Kohlenstoffausbeute bereitstellt, wobei das erste Polymer vorzugsweise ein Homopolymer oder Copolymer ist, vorzugsweise ein Blockhomopolymer oder Blockcopolymer.

8. Verfahren nach einem der vorhergehenden Ansprüche, wobei das Röhrchen bei einer Temperatur zwischen 600 °C und 1200 °C in einer inerten Atmosphäre, vorzugsweise in einer Argonatmosphäre, pyrolysiert wird.

9. Verfahren nach einem der Ansprüche 1 bis 9, wobei die mechanische Strukturierung der Zusammenstellung von Schichten unter Verwendung eines Lithografieverfahrens oder durch Schneiden oder Ritzen der Struktur in die Zusammenstellung der Schichten durchgeführt wird.

10. Nano- oder Mikroröhrchen auf Kohlenstoffbasis, die nach einem Verfahren gemäß einem der Ansprüche 1 bis 8 erhältlich ist.

11. Nano- oder Mikroröhrchen auf Kohlenstoffbasis nach Anspruch 10, wobei das Verfahren die Verwendung einer metallhaltigen Schicht oder metallhaltiger Partikel als weitere Schicht umfasst, nachdem mindestens eine zweite Schicht auf der ersten Schicht gebildet worden ist.

12. Nano- oder Mikroröhrchen auf Kohlenstoffbasis nach Anspruch 10 oder 11, wobei die Röhrchenlänge zwischen 1 mm und 100 mm liegt und/oder die Wanddicke des Nano- oder Mikroröhrchens mindestens 400 nm ist.

13. Nano- oder Mikroröhrchen auf Kohlenstoffbasis nach einem der Ansprüche 10 bis 12, wobei die innere Schicht des Röhrchens mit einer metallhaltigen Schicht bedeckt ist, wobei die metallhaltige Schicht oder metallhaltigen Partikel vorzugsweise aus einem elementaren Metall, vorzugsweise Gold, Titan und Platin, Mischungen dieser elementaren Metalle, Verbundmaterialien oder Metalloxiden, vorzugsweise SiO₂ besteht bzw. bestehen.

14. Fester Träger, umfassend eine Vielzahl von vorzugsweise unidirektional orientierten Nano- oder Mikroröhrchen auf Kohlenstoffbasis nach den Ansprüchen 10 bis 13 oder den Nano- oder Mikroröhrchen, die nach dem Verfahren gemäß einem der Ansprüche 1 bis 9 hergestellt sind.

15. Verwendung der Nano- oder Mikroröhrchen auf Kohlenstoffbasis nach einem der Ansprüche 10 bis 13, oder der Nano- oder -mikroröhrchen auf Kohlenstoffbasis, die gemäß dem Verfahren nach einem der Ansprüche 1 bis 9 hergestellt sind, oder des festen Trägers nach Anspruch 14 als Teströhrchen in katalytischen Mikroreaktoren, in Trennvorrichtungen, in Speichervorrichtungen oder mikrofluidischen Vorrichtungen, wie Tintenstrahldruckern, in Mikro- und Nanoelektronikvorrichtungen, als Katalysatorträger, als Energiespeicher-/-umwandlungssysteme, als proximale Sonden, festigkeitserhöhende Materialien, optische Komponenten und Membran, für biotechnische und medizinische Anwendungen.

## Revendications

1. Procédé de préparation de nano- ou microtubes à base de carbone comprenant les étapes suivantes :
a) formation sur un support solide d'une première couche comprenant un premier polymère,
b) formation sur la première couche d'une ou plusieurs autres couches, une deuxième couche étant formée sur la première couche et comprenant un deuxième polymère, la deuxième couche ayant une expansion de volume inférieure à la première couche lors du traitement des couches avec au moins une source choisie à partir des solvants ou de l'énergie thermique ;
c) l'auto-enroulement de l'ensemble des couches en traitant ladite source pour fournir des tubes, de préférence des tubes individuels, l'auto-enroulement étant initié par structuration mécanique de l'ensemble de couches, et
d) la pyrolyse des tubes ;
dans lequel les première et/ou deuxième couches comprennent un précurseur de carbone qui est un polymère fournissant un rendement de carbone élevé pendant la pyrolyse et est choisi dans le groupe composé de résine de phénol-aldéhyde, de résine d'urée-aldéhyde, de résine d'aniline-aldéhyde, de polyimide, de polyacrylonitrile, de polydivinylbenzène, de polyvinylpyridine, de polypyrrole, de polythiophène, de polyaniline, d'alcool de polyfurfural, d'hydrates de carbone, de copolymères ou de mélanges de ceux-ci,
dans lequel le dépôt des couches est effectué dans un procédé de revêtement par centrifugation, de revêtement par immersion ou de coulage de film et dans lequel l'étape (c) peut être effectuée en l'absence ou en présence de solvant(s).

2. Procédé selon la revendication 1, dans lequel la deuxième couche présente une aptitude au gonflement inférieure dans un solvant par rapport à l'aptitude au gonflement de la première couche dans ledit solvant et/ou dans lequel la deuxième couche possède un coefficient inférieur de dilatation thermique à une certaine température par rapport au coefficient de dilatation thermique de la première couche à ladite température.

3. Procédé selon la revendication 1 ou 2, dans lequel l'auto-enroulement dans l'étape (c) est amorcé par structuration mécanique de l'ensemble de couches, puis mise en contact de l'ensemble de couches avec ledit solvant ou chauffage de l'ensemble de couches à ladite température, de préférence chauffage de l'ensemble de couches pendant une période de 0,01 à 1,0 heure, de préférence à une température située entre 25 et 150°C, en particulier un chauffage à micro-ondes.

4. Procédé selon l'une quelconque des revendications précédentes, dans lequel les première et/ou deuxième couches sont préparées par dépôt sur le support d'une solution comprenant les premier/deuxième polymères et, optionnellement, un monomère du précurseur de carbone, de préférence en éliminant le solvant, puis en polymérisant le monomère pour former le précurseur de carbone, de préférence le monomère est polymérisé par addition d'un deuxième monomère et/ou un catalyseur et/ou par l'exécution d'un traitement thermique ou par rayonnement.

5. Procédé selon l'une quelconque des revendications précédentes, dans lequel une couche contenant du métal est formée comme une couche supplémentaire après au moins la formation d'une deuxième couche sur la première couche, la couche contenant du métal se composant de préférence d'un métal élémentaire, en particulier d'or, d'aluminium, de cuivre, de titane, de platine ou des mélanges desdits métaux élémentaires ; de matériaux composites ; ou d'oxydes métalliques, en particulier de SiO₂.

6. Procédé selon l'une quelconque des revendications précédentes, dans lequel le précurseur de carbone est de préférence une résine phénolique, de préférence une résine de résorcinol formaldéhyde (RF), de préférence formée par polymérisation de monomères de résorcinol avec une vapeur de formaldéhyde.

7. Procédé selon l'une des revendications précédentes, dans lequel le premier polymère est un polymère qui fournit un faible rendement de carbone pendant la pyrolyse, de préférence le premier polymère est un homopolymère ou un copolymère, de préférence un homopolymère bloc ou un copolymère bloc.

8. Procédé selon l'une quelconque des revendications précédentes, dans lequel le tube est pyrolysé à une température située entre 600°C et 1200°C dans une atmosphère inerte, de préférence dans une atmosphère d'argon.

9. Procédé selon l'une quelconque des revendications 1 à 9, dans lequel la structuration mécanique de l'ensemble de couches est effectuée en utilisant un procédé lithographique ou en découpant ou gravant la structure dans l'ensemble de couches.

10. Nano- ou microtube à base de carbone pouvant être obtenu par le procédé selon l'une quelconque des revendications 1 à 8.

11. Nano- ou microtube à base de carbone selon la revendication 10, dans lequel le procédé comprend l'utilisation d'une couche métallique ou de particules métalliques comme une couche supplémentaire après la formation d'au moins une deuxième couche sur la première couche.

12. Nano- ou microtube à base de carbone selon la revendication 10 ou 11, dans lequel la longueur du tube est située entre 1 mm et 100 mm et/ou l'épaisseur des parois du nanotube ou du microtube est d'au moins 400 nm.

13. Nano- ou microtube à base de carbone selon l'une quelconque des revendications 10 à 12, dans lequel la couche interne du tube est recouverte d'une couche métallique, de préférence la couche métallique ou les particules métalliques consistant en métal élémentaire, de préférence de l'or, du titane et du platine, des mélanges desdits métaux élémentaires, des matériaux composites ou des oxydes métalliques, de préférence du SiO₂.

14. Support solide comprenant une pluralité de nano- ou microtubes à base de carbone orienté de préférence unidirectionnellement selon l'une des revendications 10 à 13 ou les nano- ou microtubes préparés selon le procédé d'une quelconque des revendications 1 à 9.

15. Utilisation de nano- ou microtubes à base de carbone selon l'une quelconque des revendications 10 à 13 ou des nano- ou microtubes à base de carbone préparés selon le procédé de l'une quelconque des revendications 1-9 ou le support solide selon la revendication 14 comme des tubes de test dans des microréacteurs catalytiques, dans des dispositifs de séparation, dans des dispositifs de stockage ou des dispositifs microfluidiques tels que des imprimantes à jet d'encre, dans des dispositifs micro- et nanoélectroniques, tels que des supports de catalyseur, comme des systèmes de stockage/conversion d'énergie, comme des sondes proximales, comme des matériaux renforçateurs, des composants et membranes optiques, des applications biotechniques et médicales.
